# EUROPEAN PATENT SPECIFICATION

(11) **EP 3 308 943 B1**
(45) Date of publication and mention of the grant of the patent: **07.10.2020**
(21) Application number: 17203876.2
(22) Date of filing: 12.06.2014
(51) Int. Cl.: B29C 51/34, B29C 51/00, B29K 67/00, B29K 105/04, B29L 9/00, B29L 31/00, B29C 51/14

(54) **FOAMED ARTICLES WITH DEEP UNDERCUTS**
GESCHÄUMTE ARTIKEL MIT TIEFEN UNTERSCHNEIDUNGEN
ARTICLES EN MOUSSE EXPANSÉE À CONTRE-DÉPOUILLES PROFONDES

(30) Priority: 14.06.2013 US 201361835211 P; 18.12.2013 US 201314132589
(43) Date of publication of application: 18.04.2018
(62) Divisional of application: 14736216.4
(73) Proprietor: Eastman Chemical Company, Kingsport, TN 37660 (US)
(72) Inventor: Hawkins, Gary Stuart, Johnson City, TN 37604 (US)
(74) Representative: Ricker, Mathias

(56) References cited:
- WO-A1-97/02998
- WO-A1-2012/064203
- US-A1- 2006 270 806
- US-B2- 7 462 684
- US-B2- 7 838 620
- DATABASE WPI Week 201007 Thomson Scientific, London, GB; AN 2010-A53846 XP002730687, -& JP 4 399022 B1 (IZUMI KASEI KOGYO KK) 13 January 2010 (2010-01-13)
- DATABASE WPI Week 200026 Thomson Scientific, London, GB; AN 2000-297362 XP002730688, -& JP 2000 085004 A (SUMITOMO CHEM CO LTD) 28 March 2000 (2000-03-28)

## Description

### CROSS-REFERENCE TO RELATED APPLICATIONS

This application claims priority to U.S. Provisional Application No. 61/835,211 filed June 14, 2013.

### BACKGROUND

### 1. Field of the Invention

The present invention relates generally to articles having one or more undercuts and to processes for making such articles. More specifically, the present invention relates generally to thermoformed articles having one or more undercuts and to processes for making such articles.

### 2. Description of the Related Art

Many polyester-based packages and containers available in today's market, especially those produced from thermoforming processes, have various types of undercuts. An "undercut" is any internal or external projection of the nominal wall of a formed article that is perpendicular to the open face of the form or die used to produce the formed article. Undercuts can have a number of different functions. For example, undercuts can be used to prevent the formed article from stripping from the mold during production. Undercuts are also widely used for snap fit assemblies and other fastening applications. They can also be used to enhance the aesthetics of the formed article or enable stacking features within the formed articles.

The size of strippable undercuts is largely dependent upon the size and shape of the mold as well as the plastic material used to produce them. However, undercuts on thermoformed articles have always been limited in size due to the modulus or stiffness of the plastics used to produce them. Furthermore, undercuts on thermoformed parts have traditionally been limited to soft, smoothly blended contours with relatively large radii due to the limitations of the plastics used to produce them.

Accordingly, there is a need for a thermoplastic article having deep undercuts that do not exhibit the deficiencies presently found in conventional thermoplastic articles with undercuts.

JP 4399022 B1 discloses a molding method for stretched synthetic resin sheet involving advancing movable metal die in inner side recessed section of female metal die and setting as undercut section while the metal die is press-fitted in the female metal die.

WO 2012/064203 A1 discloses an open top container formed by trimming a thermoformed precursor or preform to provide an outwardly extending peripheral profile with the trimming cut locus directly under part of the peripheral profile only after reverting to a more relaxed condition than that at which the trimming cut was made. The process involves providing a thermoformed precursor or preform, and trimming a surround from the precursor or preform when stretched to better present the trim locus between what will be the edge of the container and the cut edge of the surround.

Specifically, WO 2012/064203 A1 discloses a thermoformed article comprising: a pair of spaced-apart walls defining a cavity there between, and an undercut projecting from one of said walls, wherein said undercut presents an apex, wherein said undercut has a maximum undercut draw depth measured at said apex and a cross-sectional undercut area measured at said apex, wherein said cavity has a cross-sectional cavity area, wherein the ratio of said cross-sectional cavity area to said cross-sectional undercut area is at least 1:1 and not more than 100:1, wherein at least a portion of said undercut and at least a portion of said wall from which said undercut projects are formed of a common layer of a polyester-containing material.

WO 97/02998 A1 discloses a packaging item which is e.g. a tray for packing fresh meat. It has at least on its bottom part grooves which open towards the inside of the packaging item. The openings of these grooves are narrower than the inside part of the grooves. If the groove opening is sufficiently narrow, e.g. 1 mm or less, unwanted liquid oozing out of the packed meat is trapped in these grooves and such separated from the meat and kept out of sight of a potential buyer.

JP 2000 085004 A discloses a molding method involving heating thermoplastic resin printing board placed on base of a lower mold, turning the board on the cavity of the upper mold, expanding, shaping and subsequently removing the mold sections, forming the lower mold to isolate the molded article with the upper mold.

US 7 838 620 B2 discloses thermoformed films or sheets comprising polyester compositions comprising polyesters which comprise (a) a dicarboxylic acid component having terephthalic acid or an ester thereof; optionally, an aromatic dicarboxylic acid or aliphatic dicarboxylic acid or esters thereof; 2,2,4,4-tetramethyl-1,3-cyclobutanediol; and 1,4-cyclohexanedimethanol.

US 2006/0270806 A1 discloses a high Tg polyester/polymer blend composition for a sheet or film. The composition comprises about 80 to about 99.8 percent by weight of a miscible blend of a polyester with a polymer. Also disclosed is a process for the preparation of a film or sheet from this composition. Compensation and protective films and sheets prepared from this composition are useful for backlight displays.

US 7 462 648 B2 discloses a system for recycling plastics, which enables a supply of recycled plastics having a stable quality required for the recycled products. A system for recycling a used plastic material as a resin material, which has (a) means for sorting used plastic materials by purpose of recycling, (b) means for crushing and melting said used plastic material sorted, (c) reviving means for regaining a desired property, and (d) means for measuring a physical property of a reclaimed plastic revived and indicating said measured physical property for quality assurance.

### SUMMARY

The present invention concerns a thermoformed article as defined in claim 1.

### BRIEF DESCRIPTION OF THE FIGURES

Embodiments of the present invention are described herein with reference to the following drawing figures, wherein:
FIG. 1 depicts a top viewpoint of a thermoformed article having internal undercuts covering the entire cavity of the article;
FIG. 2 depicts a cross-sectional viewpoint of a thermoformed article having rounded internal undercuts;
FIG. 3 depicts a cross-sectional viewpoint of a single rounded internal undercut from a thermoformed article and how the various properties of the portrayed undercut are measured;
FIG. 4 depicts a top viewpoint of a thermoformed article having rounded internal undercuts covering part of the cavity of the article;
FIG. 5 depicts a top viewpoint of a thermoformed article having offset internal undercuts;
FIG. 6 depicts a top viewpoint of a thermoformed article having tapered internal undercuts;
FIG. 7 depicts a top viewpoint of a thermoformed article having offset, tapered internal undercuts;
FIG. 8 depicts a top viewpoint of a thermoformed article having offset internal undercuts;
FIG. 9 depicts a top viewpoint of a thermoformed article having internal undercuts which can function as denest lugs;
FIG. 10 depicts a cross-sectional viewpoint of a thermoformed article having flat-shaped internal undercuts;
FIG. 11 depicts a cross-sectional viewpoint of a thermoformed article having trapezoid-shaped internal undercuts;
FIG. 12 depicts a cross-sectional viewpoint of a thermoformed article having trapezoid-shaped internal undercuts;
FIG. 13 depicts a cross-sectional viewpoint of a thermoformed article having trapezoid-shaped internal undercuts;
FIG. 14 depicts a cross-sectional viewpoint of a thermoformed article having irregular-shaped internal undercuts;
FIG. 15 depicts a cross-sectional viewpoint of a thermoformed article having irregular-shaped internal undercuts;
FIG. 16 depicts a cross-sectional viewpoint of a thermoformed article having irregular-shaped internal undercuts;
FIG. 17 depicts a cross-sectional viewpoint of a thermoformed article having irregular-shaped internal undercuts having a rounded bottom and angled triangle-shaped top;
FIG. 18 depicts a cross-sectional viewpoint of a thermoformed article having a single internal undercut;
FIG. 19 depicts a cross-sectional viewpoint of a thermoformed article having offset and tapered internal undercuts;
FIG. 20 depicts a cross-sectional viewpoint of a thermoformed article having internal undercuts in the form of acute triangles;
FIG. 21 depicts a cross-sectional viewpoint of a thermoformed article having an internal undercut in the form of a 90° triangle and an internal undercut in the form of an acute triangle;
FIG. 22 depicts a cross-sectional viewpoint of a single irregular-shaped internal undercut from a thermoformed article and how the various properties of the portrayed undercut are measured;
FIG. 23 depicts a cross-sectional viewpoint of a single triangle-shaped internal undercut from a thermoformed article and how the various properties of the portrayed undercut are measured;
FIG. 24 depicts a top viewpoint of a thermoformed article having external undercuts covering the entire cavity of the article;
FIG. 25 depicts a top viewpoint of a thermoformed article having rounded external undercuts covering part of the cavity of the article;
FIG. 26 depicts a top viewpoint of a thermoformed article having offset external undercuts;
FIG. 27 depicts a top viewpoint of a thermoformed article having tapered external undercuts;
FIG. 28 depicts a top viewpoint of a thermoformed article having offset, tapered external undercuts;
FIG. 29 depicts a top viewpoint of a thermoformed article having external undercuts which can function as denest lugs;
FIG. 30 depicts a cross-sectional viewpoint of a thermoformed article having rounded external undercuts;
FIG. 31 depicts a cross-sectional viewpoint of a thermoformed article having irregular-shaped external undercuts having a rounded bottom and angled triangle-shaped top;
FIG. 32 depicts a cross-sectional viewpoint of a thermoformed article having a single external undercut;
FIG. 33 depicts a cross-sectional viewpoint of a thermoformed article having offset and tapered external undercuts;
FIG. 34 depicts a cross-sectional viewpoint of a thermoformed article having an external undercut in the form of a 90° triangle and an external undercut in the form of an acute triangle;
FIG. 35 depicts a cross-sectional viewpoint of a single round-shaped external undercut from a thermoformed article and how the various properties of the portrayed undercut are measured;
FIG. 36 is a graph comparing the opacity and light blocking properties of foamed polyester sheets having a thickness of 15 mil and 40 mil;
FIG. 37 is a graph depicting the relationship between Young's Modulus and specific gravity in polyester sheeting;
FIG. 38 is a graph depicting the effect of branching agents on tear resistance in foamed polyester sheets;
FIG. 39 is a graph depicting the effect of skin layer thickness on tear resistance; and
FIG. 40 is a graph depicting the effect of skin layer thickness on instrumental impact.

### DETAILED DESCRIPTION

In one or more embodiments described herein, the present invention is directed to articles having one or more types of deep undercuts. As used herein, an "undercut" is understood to be any internal or external projection of the nominal wall of a formed article that extends perpendicular to the open face of the form or die used to produce the formed article. Undercuts are one of the plastic product designer's favorite design details. They are widely used for snap fit assemblies and other locating and fastening applications. They are also used to add aesthetically-pleasing details or to enable stacking features within formed parts. As discussed below in further detail, the undercuts described herein provide one or more advantages over undercuts typically found on conventional articles.

In various embodiments described herein, an article is provided that comprises at least one undercut projecting from one of the walls of the article. Generally, the articles described herein comprise a thermoformed article. In one or more embodiments, a thermoformed article is provided that comprises a pair of spaced-apart walls defining a cavity therebetween and an undercut projecting from one of the walls.

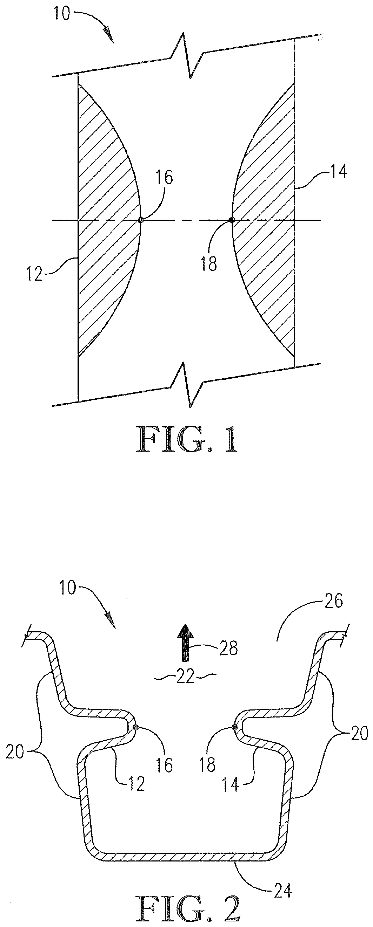

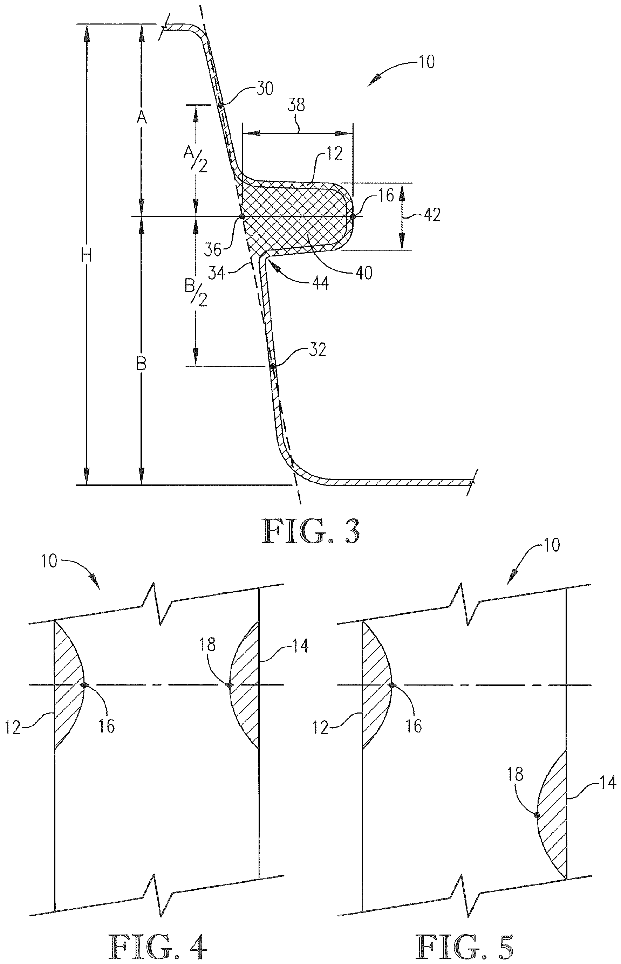

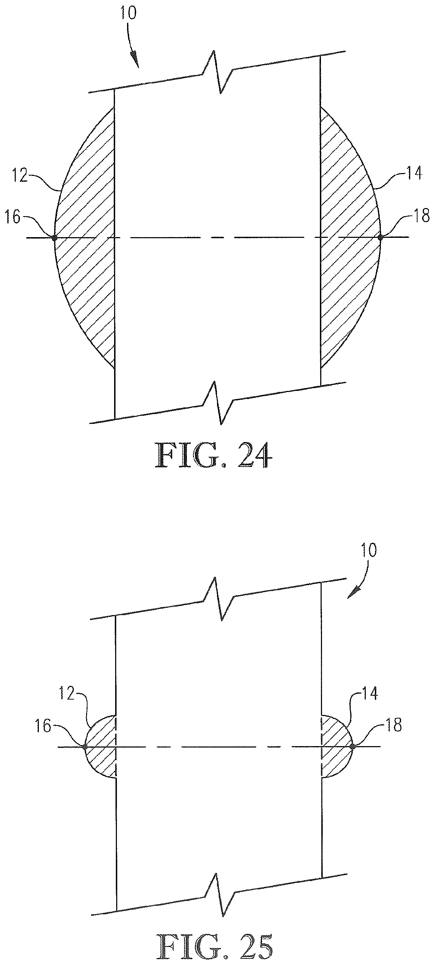

In order to better understand the subsequent discussion regarding the undercuts described herein, the initial focus is placed on the embodiments depicted in FIGS. 1-3. FIGS. 1-3 depict an exemplary thermoformed article having internal undercuts according to one embodiment of the present invention. Although the following disclosure may initially focus on the embodiments depicted in FIGS. 1-3, it should be noted that all relevant disclosure herein regarding FIGS. 1-3 applies to the later described embodiments in FIGS. 4-35, as long as the disclosure does not conflict with the depicted embodiment. As described in greater detail below, FIGS. 4-23 depict other various embodiments of thermoformed articles comprising internal undercuts in several different configurations. Likewise, FIGS. 24-35 depict other various embodiments of thermoformed articles comprising external undercuts in several different configurations. These various embodiments are described in greater detail below.

FIG. 1 depicts a top view of an exemplary thermoformed article 10 having two internal undercuts 12, 14 projecting from the wall of the article. Each of the undercuts 12, 14 have an apex 16, 18 defining the maximum draw depth of the undercut. The dashed line in FIG. 1 crossing through the apexes 16, 18 defines the cross-sectional viewpoint depicted in FIG. 2. FIG. 2 depicts an exemplary cross-sectional view of the article 10. The article 10 comprises two undercuts 12, 14 having apexes 16, 18 which project from the sidewall 20 of the article. As shown in FIG. 2, the article 10 has a cavity 22 defined by a closed end 24 and an open end 26. The arrow 28 depicts the pull direction that the mold used to produce the article will be pulled away from the article after forming the article.

The configuration of the undercuts described herein can be determined using a variety of different measurements. Certain of these measurements are illustrated in FIG. 3, which depicts a cross-sectional view of a single round-shaped internal undercut 12 from an article 10. As shown in FIG. 3, the article 10 has a height (H) which is the overall height of the upper sidewall (A) and the lower sidewall (B). In various embodiments, the height (H) of the article is at least about 20, 25, 30, 35, 40, 45, or 50 mm and/or not more than about 1,000, 500, 250, 100 or 75 mm. The height of the upper sidewall (A) is determined by measuring the distance from the top of the article to a perpendicular line running through the apex 16. Likewise, the height of the lower sidewall (B) is determined by measuring the distance from the bottom of the article 10 to a perpendicular line running through the apex 16. An upper sidewall midpoint 30 and a lower sidewall midpoint 32 are calculated by taking the respective heights of the upper and lower sidewalls (A, B, respectively) and dividing them in half. As shown in FIG. 3, a sidewall extension line 34 extends through midpoints 30, 32 and intersects the perpendicular line running through the apex 16 at a midpoint 36. Consequently, various properties of the undercut 12 can be measured using the sidewall extension line 34 and the midpoint 36. For instance, the maximum draw depth 38 of the undercut can be determined by measuring the distance from the midpoint 36 to the apex 16. In addition, the cross-sectional area of the undercut 40 can be determined by measuring the area within the undercut 12 based on where the sidewall extension line 34 intersects the base of the undercut 12. The average undercut thickness 42 can be determined by dividing the cross-sectional area 40 by the maximum draw depth 38. Finally, the article 10 has a minimum undercut radius of curvature 44, which is the minimum radius of curvature of any portion of the undercut 12, measured in the vertical plane of the apex 16.

The actual dimensions of the undercuts are dependent upon the size and shape of the article as well as the material used to produce the article. Furthermore, the type of mold used to produce the article can influence the number and size of undercuts in an article. For example, female molds generally enable a greater number of undercuts than male molds because of plastic shrinkage. As a rule, the size of undercuts on a female mold will depend on the length, width, and depth of the mold, the location of the undercuts, as well as the thickness and properties of the plastic material to be used, most notably stiffness and toughness.

In various embodiments described herein, at least a portion of the thermoformed articles are formed from a polyester-containing material. In such embodiments, at least a portion of the undercut and at least a portion of the wall in the article can be formed from a common layer of this polyester-containing material.

In one or more embodiments, the polyester-containing material comprises a foamed polyester. In such embodiments, the foamed polyester can have a void volume of at least about 5, 10, 15, 20, 30, or 40 percent and/or not more than about 90, 80, 70, 60, or 50 percent. Further, the foamed polyester can have a void volume of about 5 to about 80 percent, about 15 to about 60 percent, or about 30 to about 50 percent. These foamed polyesters can be produced using any known and conventional method known in the art. For example, the foamed polyesters can be produced using direct gas injection and/or chemical agent foaming.

Some of the possible benefits associated with using foamed polyesters in the articles include, for example, increased opacity in the article; improved flexibility without the use of plasticizers or modifiers; decreased specific gravity which makes the article more sustainable; decreased amount of polyester-containing material needed to produce the articles, and improved yield (i.e., number of articles per unit mass of plastic). Foamed polyesters are generally more resilient, tougher, and flexible than other translucent or opaque low specific gravity polymers used in the prior art, such as, for example, high impact polystyrene. This increased flexibility and resiliency provided by the foamed polyesters can allow for more design freedom in the produced articles. For instance, the foamed polyesters described herein can enable the formation of greater undercuts in an article than is possible with other prior art polymers.

In one or more embodiments, the polyester-containing material has a specific gravity of not more than. In another embodiment, the polyester-containing material has a density of at least about 0.2, 0.3, 0.4, 0.5, 0.6, 0.7, 0.8, or 0.9 g/cc and/or not more than 1.3, 1.1, 0.9, 0.7, 0.5, 0.4, or 0.2 g/cc.

In various embodiments, the polyester-containing material can have a Young's Modulus of at least Mpa as measured according to ASTM D882. Additionally, the polyester-containing material can have a Young's Modulus of not more than about 1,000 Mpa as measured according to ASTM D882.

In various embodiments, the polyester-containing material has an elongation at break percentage of at least 1, 5, 10, 25, 50, 75, 85, or 95 percent as measured according to ASTM D882. Additionally or alternatively, the polyester-containing material can have an elongation at break percentage of not more than about 500, 250, 150, 125, or 125 percent as measured according to ASTM D882.

In various embodiments, the polyester-containing material has a tear resistance energy of at least about 50, 75, 100, 125, 150, 175, or 200 N-mm as measured according to ASTM D1004. In certain embodiments, the polyester-containing material has a total tear energy of at least about 0.001, 0.01, 0.05, 0.1, 0.25, 0.5, 1.0, or 1.5 J as measured according to ASTM D1004.

In various embodiments, the polyester-containing material has an instrumental impact of at least about 0.1, 0.5, 1.0, 1.5, 2.0, or 2.5 J as measured according to ASTM D3763.

In various embodiments, the polyester-containing material can be opaque and can block at least about 25, 50, 75, 90, 95, or 99 percent of light attempting to pass through it as measured according to ASTM D003 in conjunction with ASTM D1746.

Generally, flexible and tough materials like foamed polyesters will be easier to strip from the mold without damaging the article compared to materials like polystyrene. The increased ductility allows the material to flex while stripping off the undercut. In contrast, the brittle behavior of acrylics, impact polystyrene, or crystalline polystyrene used in prior art articles cause the articles to be overstressed or even crack with the same amount of flexing.

The polyester-containing material comprises an acid component and a glycol component. The glycol component comprises cyclohexanedimethanol and/or 2,2,4,4-tetramethyl-1,3-cyclobutanediol. The acid component comprises terephthalic acid, isophthalic acid, or a combination thereof. Exemplary polyesters that may be used as the polyester-containing material are further described in U.S. Patent No. 7,838,620. One specific example of a polyester-containing material suitable for use in the articles of the present invention is Tritan™ Copolyester MP100, which is available from Eastman Chemical Company of Kingsport, Tennessee.

Various types of additives can be added to the polyester-containing material in order to enhance particular properties. These additives can include, for example, a chain extender, a branching agent, or a combination thereof. In one embodiment, the polyester-containing material comprises a chain extender. In another embodiment, the polyester-containing material comprises a branching agent. For example, the polyester-containing material can comprise one or more branching agents in an amount of at least about 0.01, 0.05, or 0.1 mole percent and/or not more than about 10, 5, or 1.5 mole percent. The branching agent can comprise, for example, an acidic branching agent with a tri-functional or greater monomer, an alcoholic branching agent with a tri-functional or greater monomer, or a combination thereof.

The toughness of the polyester-containing material can be increased by, for example, increasing the branching agent therein, decreasing the amount of foam to increase the density, and/or coextruding or coinjecting the article with natural polyester skin layers.

Using the polyester-containing material described above, undercuts with varying dimensions can be produced. The undercuts can have a maximum draw depth of at least about 15, 18, 22, 24, 26, 28, or 30 mm and/or not more than about 100, 75, 50, 40, or 35 mm. In another embodiment, the undercuts have a cross-sectional area of at least about 50, 100, 150, 200, 250, 300, 350, or 400 mm² and/or not more than about 2,500, 1,500, 1,000, 800, 600, or 500 mm². In yet another embodiment, the undercuts have an average thickness of at least 5, 10, 15, or 20 mm and/or not more than about 50, 40, 30, or 25 mm. In still yet another embodiment, the article comprises a ratio of maximum undercut draw depth to average undercut thickness of at least about 0.5:1, 0.6:1, 0.7:1, 0.8:1, 0.9:1, 1:1, 1.1:1, 1.2:1, 1.3:1, 1.4:1, or 1.5:1 and/or not more than about 10:1, 8:1, 6:1, 4:1, or 2:1. In certain embodiments, the article can comprise at least two undercuts having different maximum draw depths and/or cross-sectional areas.

In various embodiments, the height (H) of the article is at least about 20, 25, 30, 35, 40, 45, or 50 mm and/or not more than about 1,000, 500, 250, 100 or 75 mm. In one embodiment, the article comprises a ratio of wall height to maximum undercut draw depth of at least about 0.5:1, 0.75:1, 1:1, 1.25:1, or 1.5:1 and/or not more than about 50:1, 30:1, 20:1, 15:1, 10:1, 6:1, or 4:1. In another embodiment, the article comprises a ratio of wall height to average undercut thickness of at least about 0.5:1, 0.75:1, 1:1, 1.25:1, or 1.5:1 and/or not more than about 50:1, 30:1, 20:1, 15:1, 10:1, 6:1, or 4:1.

As previously discussed in regard to FIG. 2, the article comprises a cavity 22. This cavity can have a cross-sectional area (measured at the undercut apex) of at least about 1,000, 2,000, 3,000, 4,000, or 5,000 mm² and/or not more than about 50,000, 40,000, 30,000, 20,000, or 10,000 mm². The article comprises a ratio of the cross-sectional cavity area to the cross-sectional undercut area of at least about 1:1, 2:1, 4:1, 6:1, 8:1, or 10:1 and not more than about 100:1.

The article described herein may comprise a monolayered or multilayered structure. In various embodiments, the article comprises at least 1, 2, or 3 layers and/or not more than 10, 6, or 4 layers. In such embodiments, these layers can be used to form the undercuts and/or walls of the article. In one embodiment, the average thickness of the layer or layers forming the undercut and/or wall is at least about 0.01, 0.05, 0.75, 0.1, 0.2, 0.3, 0.4, or 0.5 mm and/or not more than about 10, 8, 6, 4, 2, 1.5, 1.25, or 1 mm. In another embodiment, the ratio of the average undercut thickness to the average thickness of the layer or layers of the undercut and/or wall is at least about 2:1, 3:1, 4:1, 5:1, or 6:1 and/or not more than about 50:1, 30:1, 20:1, or 10:1.

As mentioned above, the article can comprise a minimum undercut radius of curvature. In various embodiments, the minimum undercut radius of curvature is at least about 0.01, 0.05, 0.1, 0.2, or 0.5 mm and/or not more than about 10, 5, 2, 1, or 0.75 mm. In certain embodiments, the article can comprise at least two undercuts having different minimum radii of curvature.

Because undercuts generally require further stretching of the sheet stock, it can be important to keep the draw depth or ratio in mind when designing undercuts. Normally, the distance that the undercut projects into the article is kept to a minimum. With most materials like polystyrene, impact polystyrene, acrylics and the like, it is not generally advisable to have undercuts of more than 0.5 inches (12.7 mm), with typical undercut depths being less than 0.375 inches (9.525 mm). In contrast, due to the flexibility and durability of the polyester-containing materials described herein, deeper undercuts compared to the prior art are possible.

As noted above, the articles described herein generally can be thermoformed articles. The articles described herein can be used, for example, in packaging or transporting food products, medical instruments, and other products which are typically sterilized before consumption or use. In one embodiment, the undercuts are configured to secure a product within the cavity of the article. In another embodiment, the undercuts are configured to provide design aesthetics to the article. In yet another embodiment, the undercuts are configured to provide denesting properties to the article.

In one embodiment, the article comprises a sterilized article. In another embodiment, the article comprises a tray. In yet another embodiment, the article comprises a medical packaging.

FIGS. 4-23 depict other embodiments of thermoformed articles comprising internal undercuts in several different configurations. FIGS. 4-9 depict top views of various thermoformed articles having different undercut configurations.

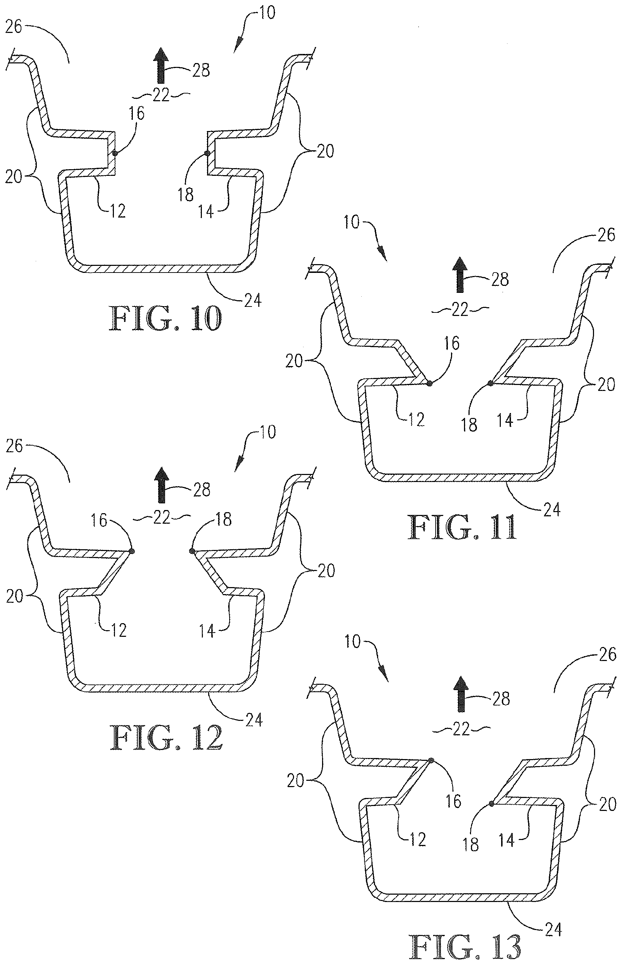

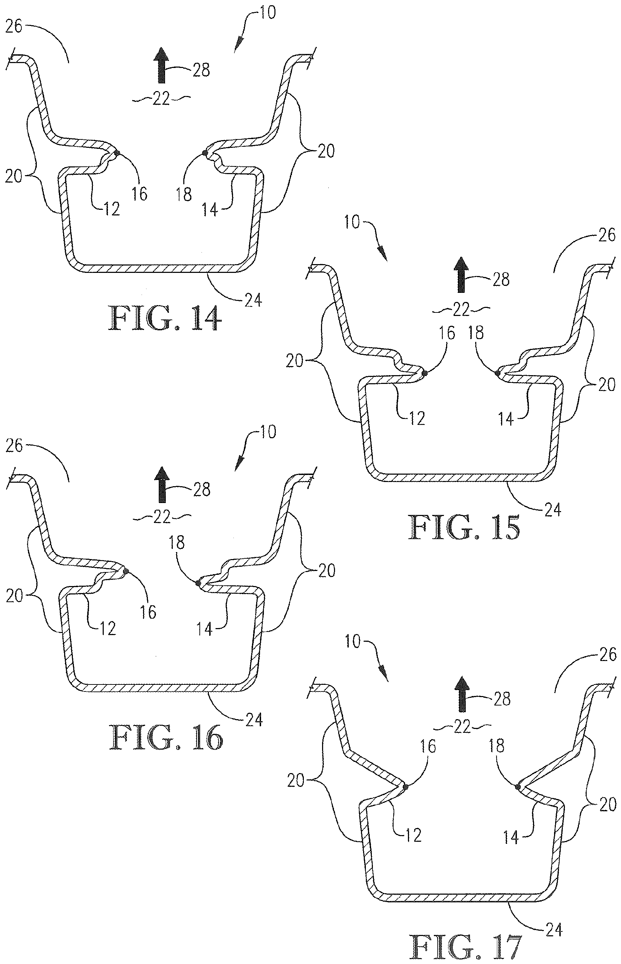

FIG. 4 depicts an article 10 comprising two undercuts 12, 14 that partially cover the cavity of the article. The dashed line in FIG. 4 crossing through the apexes 16, 18 defines the location where the cross-sectional viewpoint of the article can be observed. The undercuts 12, 14 depicted in FIG. 4 can exhibit a number of different shapes and configurations depending on the mold used to produce them. For example, the undercuts 12, 14 depicted in FIG. 4 can have any one of the cross-sectional configurations as shown in FIGS. 2 and 10-17. It should be noted that all numerals provided in FIGS. 10-17 represent the same general components as identified above in regard to FIG. 2 unless otherwise noted. FIG. 10 depicts a cross-sectional viewpoint of an article 10 having undercuts 12, 14 that have flat-shaped apexes 16, 18. FIG. 11 depicts a cross-sectional viewpoint of an article 10 having trapezoid-shaped internal undercuts 12, 14 that have pointed apexes 16, 18. FIG. 12 depicts a cross-sectional viewpoint of an article 10 having trapezoid-shaped internal undercuts 12, 14 that have pointed apexes 16, 18. FIG. 13 depicts a cross-sectional viewpoint of an article 10 having trapezoid-shaped internal undercuts 12, 14 that have pointed apexes 16, 18 in opposite directions. FIG. 14 depicts a cross-sectional viewpoint of an article 10 having irregular-shaped internal undercuts 12, 14 that have rounded apexes 16, 18. FIG. 15 depicts a cross-sectional viewpoint of an article 10 having irregular-shaped internal undercuts 12, 14 that have rounded apexes 16, 18. FIG. 16 depicts a cross-sectional viewpoint of an article 10 having irregular-shaped internal undercuts 12, 14 that have rounded apexes 16, 18 in opposite directions. FIG. 17 depicts a cross-sectional viewpoint of an article 10 having irregular-shaped internal undercuts 12, 14 that have triangle-shaped tops and rounded bottoms.

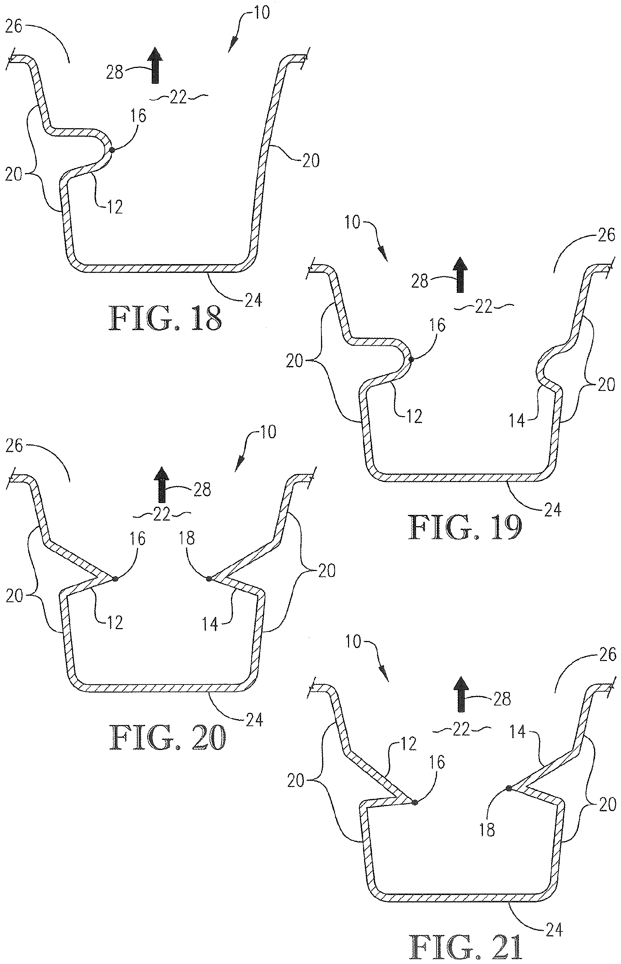

FIG. 5 depicts an article 10 comprising offset undercuts 12, 14 that partially cover the cavity of the article. The dashed line in FIG. 5 crossing through apex 16 defines the location where a cross-sectional viewpoint of the article can be observed. The undercuts 12, 14 depicted in FIG. 5 can exhibit a number of different shapes and configurations depending on the mold used to produce them. For example, the undercuts 12, 14 depicted in FIG. 5 can have the cross-sectional configuration as shown in FIG. 18. It should be noted that all numerals provided in FIG. 18 represent the same general components as identified above in regard to FIG. 2 unless otherwise noted. FIG. 18 depicts a cross-sectional viewpoint of an article 10 having a rounded offset undercut 12.

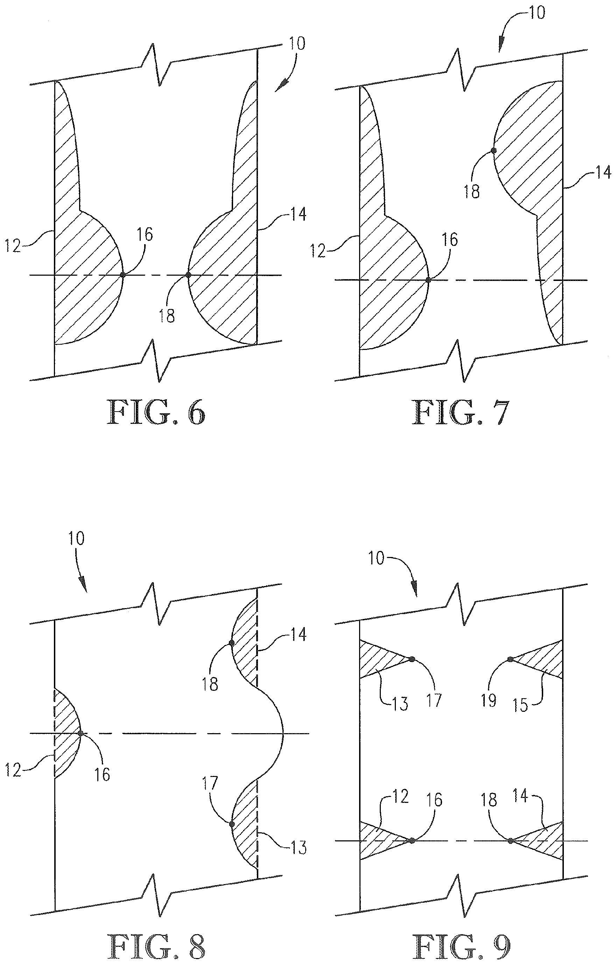

FIG. 6 depicts an article 10 comprising tapered undercuts 12, 14 that completely cover the cavity of the article. The dashed line in FIG. 6 crossing through apexes 16, 18 defines the location where a cross-sectional viewpoint of the article can be observed. The undercuts 12, 14 depicted in FIG. 6 can exhibit a number of different shapes and configurations depending on the mold used to produce them. For example, the undercuts 12, 14 depicted in FIG. 6 can have the cross-sectional configurations as previously described and shown in FIGS. 2 and 10-17.

FIG. 7 depicts an article 10 comprising offset tapered undercuts 12, 14 that cover the cavity of the article. The dashed line in FIG. 7 crossing through apex 16 defines the location where a cross-sectional viewpoint of the article can be observed. The undercuts 12, 14 depicted in FIG. 7 can exhibit a number of different shapes and configurations depending on the mold used to produce them. For example, the undercuts 12, 14 depicted in FIG. 7 can have the cross-sectional configuration as shown in FIG. 19. It should be noted that all numerals provided in FIG. 19 represent the same general components as identified above in regard to FIG. 2 unless otherwise noted. FIG. 19 depicts a cross-sectional viewpoint of an article 10 having a rounded offset undercut 12 with an apex 16; however, the other undercut 14 is not at its maximum draw depth.

FIG. 8 depicts an article 10 comprising multiple undercuts 12, 13, and 14 that partially cover the cavity of the article. The dashed line in FIG. 8 crossing through the apex 16 defines a location where the cross-sectional viewpoint of the article can be observed. The undercuts 12, 13, and 14 depicted in FIG. 8 can exhibit a number of different shapes and configurations depending on the mold used to produce them. For example, the undercuts 12, 13, and 14 depicted in FIG. 8 can have the cross-sectional configuration as shown in FIG. 18.

FIG. 9 depicts an article 10 comprising multiple undercuts 12, 13, 14, and 15 that partially align the cavity of the article and can function as denesting lugs. The dashed line in FIG. 9 crossing through the apexes 16, 18 defines the location where a cross-sectional viewpoint of the article can be observed. The undercuts depicted in FIG. 9 can exhibit a number of different shapes and configurations depending on the mold used to produce them. For example, the undercuts depicted in FIG. 9 can have any one of the cross-sectional configurations as shown in FIGS. 20 and 21. It should be noted that all numerals provided in FIGS. 20 and 21 represent the same general components as identified above in regard to FIG. 2 unless otherwise noted. FIG. 20 depicts a cross-sectional viewpoint of an article 10 having internal undercuts 12, 14 in the shape of acute triangles. FIG. 21 depicts a cross-sectional viewpoint of an article 10 having an undercut 12 in the form of a triangle having a 90° angle and an undercut 14 in the form of an acute triangle.

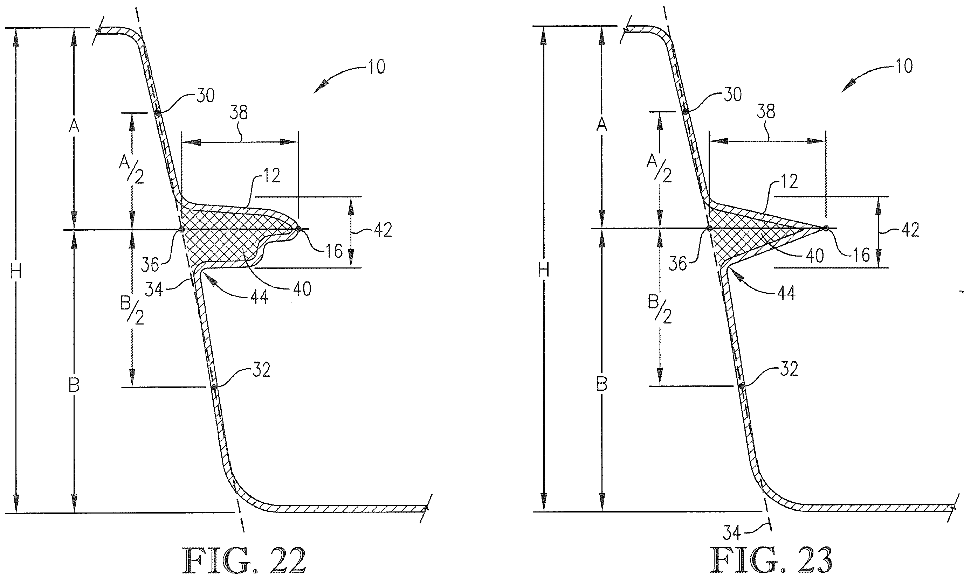

FIGS. 22 and 23 depict how the various properties of the internal undercuts can be measured. In particular, FIGS. 22 and 23 show that the same measurements previously described above in regard to FIG. 3 are used to measure the properties in both irregular-shaped and triangle-shaped undercuts. It should be noted that all numerals provided in FIGS. 22 and 23 represent the same general components as identified above in regard to FIG. 3.

FIGS. 24-35 depict embodiments of thermoformed articles comprising external undercuts in several different configurations. FIGS. 24-29 depict top views of various thermoformed articles having different undercut configurations.

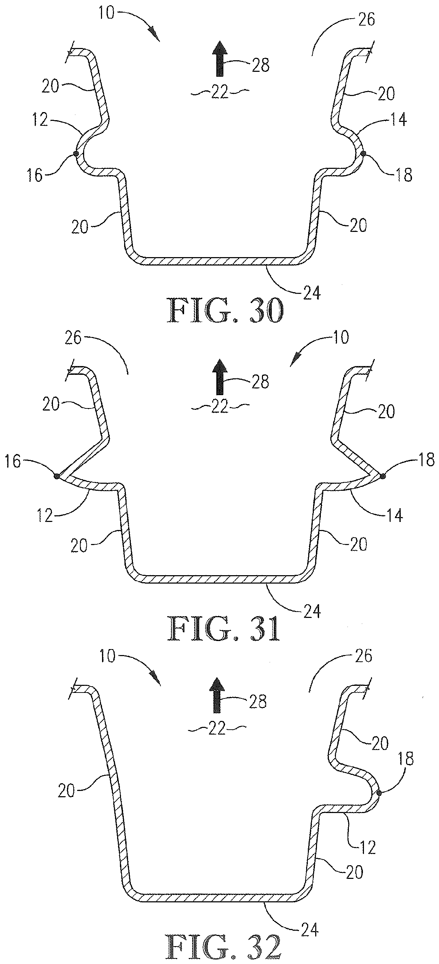

FIG. 24 depicts an article 10 comprising two undercuts 12, 14 that cover the external surface of the article. The dashed line in FIG. 24 crossing through the apexes 16, 18 defines the location where the cross-sectional viewpoint of the article can be observed. The undercuts 12, 14 depicted in FIG. 24 can exhibit a number of different shapes and configurations depending on the mold used to produce them. For example, the undercuts 12, 14 depicted in FIG. 24 can have the cross-sectional configurations as shown in FIGS. 30 and 31. It should be noted that all numerals provided in FIGS. 30 and 31 represent the same general components as identified above in regard to FIG. 2 unless otherwise noted. FIG. 30 depicts a cross-sectional viewpoint of an article 10 having undercuts 12, 14 that have round-shaped apexes 16, 18. FIG. 31 depicts a cross-sectional viewpoint of article 10 having irregular-shaped internal undercuts 12, 14 that have triangle-shaped tops and rounded bottoms.

FIG. 25 depicts an article 10 comprising two undercuts 12, 14 that partially cover the external surface of the article. The dashed line in FIG. 25 crossing through the apexes 16, 18 defines the location where the cross-sectional viewpoint of the article can be observed. The undercuts 12, 14 depicted in FIG. 25 can exhibit a number of different shapes and configurations depending on the mold used to produce them. For example, the undercuts depicted in FIG. 25 can have the cross-sectional configurations as shown in FIGS. 30 and 31, which are described above.

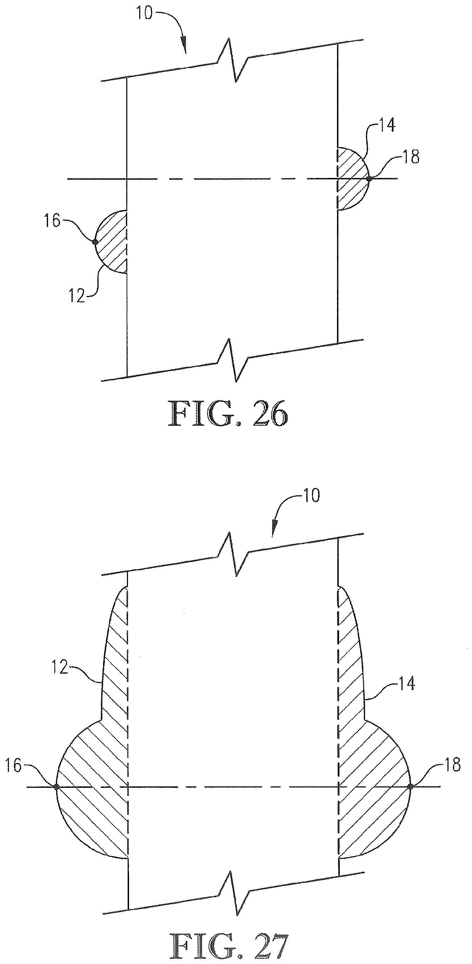

FIG. 26 depicts an article 10 comprising offset undercuts 12, 14 that partially cover the external surface of the article. The dashed line in FIG. 26 crossing through apex 18 defines the location where a cross-sectional viewpoint of the article can be observed. The undercuts 12, 14 depicted in FIG. 26 can exhibit a number of different shapes and configurations depending on the mold used to produce them. For example, the undercuts 12, 14 depicted in FIG. 26 can have the cross-sectional configuration as shown in FIG. 32. It should be noted that all numerals provided in FIG. 32 represent the same general components as identified above in regard to FIG. 2 unless otherwise noted. FIG. 32 depicts a cross-sectional viewpoint of an article 10 having a rounded offset undercut 12 with an apex 16.

FIG. 27 depicts an article 10 comprising tapered undercuts 12, 14 that completely cover the external surface of the article. The dashed line in FIG. 27 crossing through apexes 16, 18 defines the location where a cross-sectional viewpoint of the article can be observed. The undercuts depicted in FIG. 27 can exhibit a number of different shapes and configurations depending on the mold used to produce them. For example, the undercuts depicted in FIG. 27 can have the cross-sectional configurations as previously described and shown in FIGS. 30 and 31.

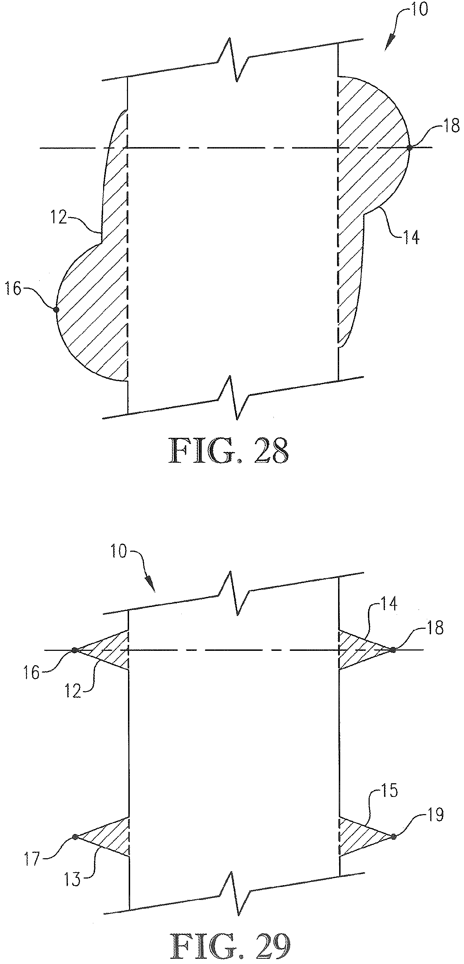

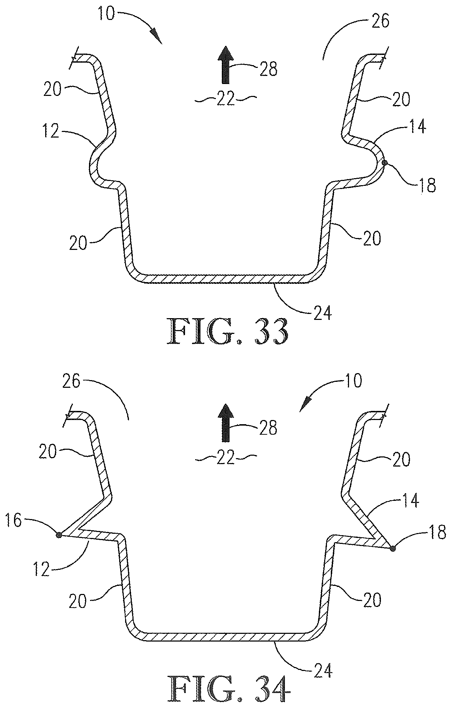

FIG. 28 depicts an article 10 comprising offset tapered undercuts 12, 14 that cover the external surface of the article. The dashed line in FIG. 28 crossing through apex 16 defines the location where a cross-sectional viewpoint of the article can be observed. The undercuts 12, 14 depicted in FIG. 28 can exhibit a number of different shapes and configurations depending on the mold used to produce them. For example, the undercuts depicted in FIG. 28 can have the cross-sectional configuration as shown in FIG. 33. It should be noted that all numerals provided in FIG. 33 represent the same general components as identified above in regard to FIG. 2 unless otherwise noted. FIG. 33 depicts a cross-sectional viewpoint of an article 10 having a rounded offset undercut 14 with an apex 18; however, the other undercut 12 is not at its maximum draw depth.

FIG. 29 depicts an article 10 comprising multiple undercuts 12, 13, 14, and 15 that partially cover the external surface of the article and can function as denesting lugs. The dashed line in FIG. 29 crossing through the apexes 16, 18 defines the location where a cross-sectional viewpoint of the article can be observed. The undercuts depicted in FIG. 29 can exhibit a number of different shapes and configurations depending on the mold used to produce them. For example, the undercuts depicted in FIG. 29 can have the cross-sectional configuration as shown in FIG. 34. It should be noted that all numerals provided in FIG. 34 represent the same general components as identified above in regard to FIG. 2 unless otherwise noted. FIG. 34 depicts a cross-sectional viewpoint of an article 10 having an undercut 12 in the form of an acute triangle and an undercut 14 in the form of a triangle having a 90° angle.

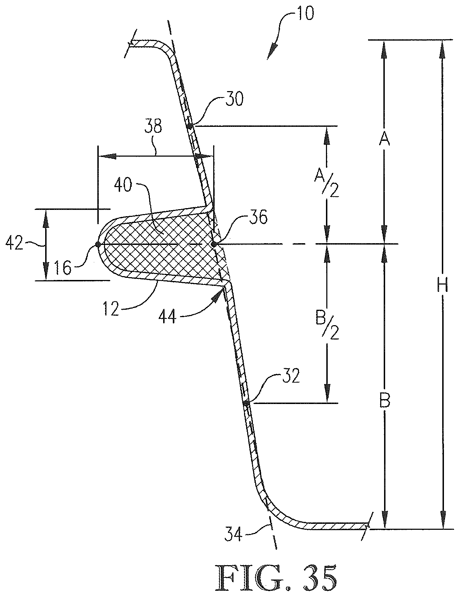

FIG. 35 depicts how the various properties of the external undercuts can be measured. In particular, FIG. 35 shows that the same measurements previously described above in regard to FIG. 3 are used to measure the properties in external undercuts. It should be noted that all numerals provided in FIG. 35 represent the same general components as identified above in regard to FIG. 3.

In various embodiments, a process for producing a thermoformed article is provided. The process can include the steps of (a) foaming a polyester-containing material to form a foamed polyester; (b) forming a sheet from the foamed polyester using a flat sheeting die; and (c) thermoforming the sheet into the thermoformed article. The thermoforming can comprise, for example, vacuum forming, pressure forming, or a combination thereof.

In various embodiments, a processes for producing a thermoformed article, where the process comprises (a) thermoforming a sheet into a thermoformed item by forcing the sheet into contact with a undercut-forming shaped surface of a mold while the sheet is maintained at an elevated thermoforming temperature; (b) cooling the thermoformed item below the thermoforming temperature to thereby provide a cooled thermoformed item; and (c) separating the cooled thermoformed item from contact with the mold by moving the cooled thermoformed item and/or the mold in a pull direction. In certain embodiments, in step (c), the undercut-forming shaped surface of the mold is only retracted from the formed undercut in the pull direction and not in any other direction.

The thermoforming steps described herein can occur, for example, at temperatures of at least about 40, 60, 80, or 100 °C and/or not more than about 250, 200, 150, or 100 °C. The cooling step described herein can reduce the temperature of the thermoformed item to, for example, a temperatures of at least about 10, 20, 30, 40, or 50 °C and/or not more than about 200, 150, 75, or 50 °C.

It should be noted that the processes described herein can utilize a male mold or a female mold to produce the article. Thus, the methods of production described herein are equally applicable for producing articles with internal and/or external undercuts.

This invention can be further illustrated by the following examples of embodiments thereof, although it will be understood that these examples are included merely for the purposes of illustration and are not intended to limit the scope of the invention unless otherwise specifically indicated.

### EXAMPLES

### Example 1

In this example, the opacity and light blocking properties of the foamed polyester-containing material were tested. In order to produce the thermoplastic article, a polyester resin (Tritan™ Copolyester MP100 from Eastman Chemical Company) was dried in desiccant dryers using standard practices at -40°C dew point air and 1 cfm air flow/lb/hr of resin to achieve a polyester pellet with a residual moisture content below 200 ppm.

Sheeting of the foamed polyester pellet was performed on a Welex extrusion line with a standard 3.5", 24/1 L/D Egan-Davis-Standard extruder/screw with a barrier and a Maddock mixing section design. Foaming of the polyester was achieved during this step by introducing a gas or chemical blowing agent directly into the extrusion chamber with the polyester pellet. Consequently, a core layer (i.e., layer B) was formed containing the foamed polyester resin. In addition, unfoamed skin layers (i.e., layer A) were separately produced from the polyester pellets using a 1.5" 24/1 L/D Egan-Davis-Standard satellite extruder with a barrier screw design. Typical copolyester extrusion temperatures about 243 °C to 249 °C (about 470°F to 480°F) were used in the above extrusion processes. A Welex feed block was then used in the feed block to direct the flow of the melted polyesters from the extruders to a 36" wide Cloeren coat hanger flat sheet type die in order to produce a multilayered sheet having an A/B/A configuration. The temperatures of the feed block and die were lowered as much as possible, but high enough to prevent excess pressure or motor amps. Generally, the temperature at the feed block and die was about about 204 °C to 232 °C (400°F to 450°F).

The sheets exiting the die were allowed to cool on a three-roll vertical chill roll stack. The roll gap was set to that of the desired overall sheet thickness, but a minimum amount of nip pressure was applied. Once cooled by the roll stack, the sheet was transported upstream of the die and wound onto cores as normal sheet/film extrusion practice. The produced sheet had an A/B/A configuration, meaning that it had a foamed polyester core (layer B) and unfoamed polyester skins (layer A).

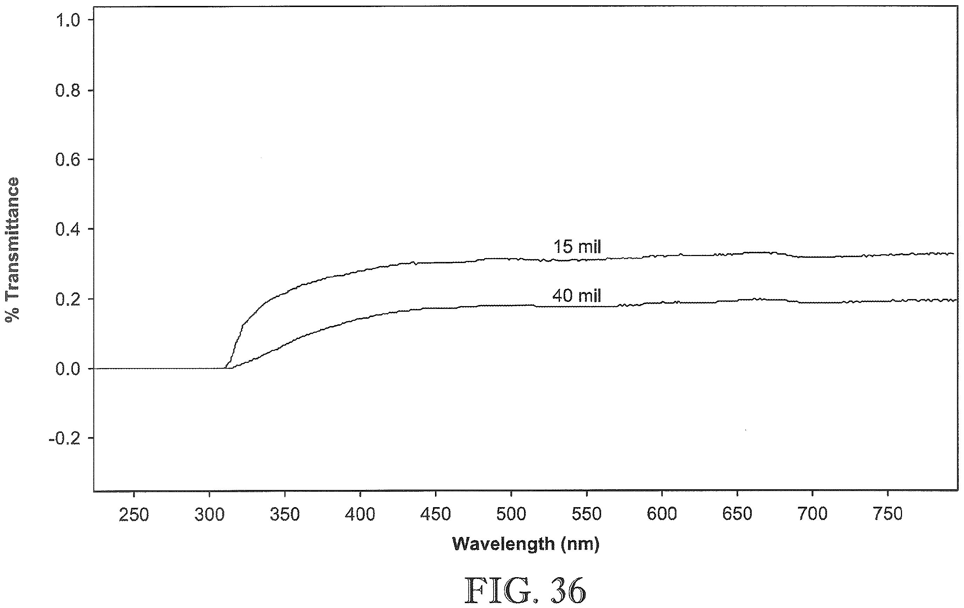

The opacity and light blocking properties of the foamed polyester core (layer B) were then tested using a Perk and Elmer UV-Vis Spectroscope. Using the process described above, two separate sheets were produced. Both sheets contained an A/B/A configuration as described above, but the foamed core layer differed in thickness (15 mil and 40 mil). The foamed polyester in both samples had a density of 0.55 g/cc. FIG. 36 depicts the light blocking properties of these two layers. Normally, polyesters in articles are clear and allow greater than 90% of light through the substrate; however, as shown in FIG. 36, the foamed polyester sheeting exhibited superior light blocking properties.

### Example 2

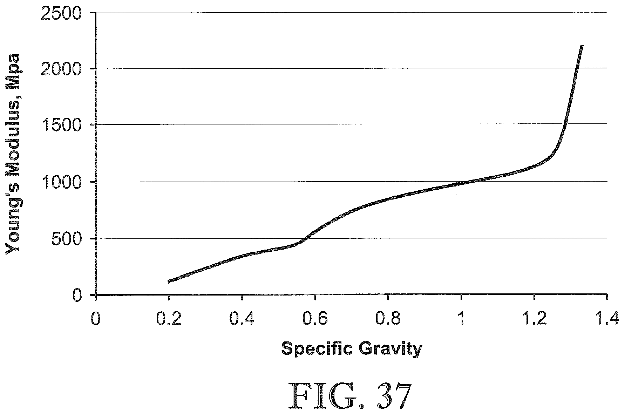

In this example, the change in the flexibility of the sheeting was compared to the specific gravity of the polyester. For this example, sheets containing the A/B/A configuration were produced from Tritan™ Copolyester MP100 from Eastman Chemical Company and Eastar™ Copolyester GN001 from Eastman Chemical Company using the process described in Example 1. In order to test the influence of the polyester's specific gravity on the flexibility of the resulting sheets, the Young's Modulus was measured according to ASTM D882 for each sheet along with the foamed polyester's specific gravity. These results are depicted in TABLE 1 and FIG. 37, which shows that flexibility improved (i.e., modulus was reduced) as the specific gravity decreased. All materials in FIG. 37 having a specific gravity below 0.6 were foamed sheets produced with Tritan™ copolyester; however, materials between 0.6 and below 1.18 were foamed sheets produced from Tritan™ or Eastar™. These foamed samples were tested against unfoamed sheets made from Tritan™ (1.18) and Eastar™ (1.27). Thus, FIG. 37 also shows that foaming lowers the specific gravity of the polyester and increases its flexibility.

**TABLE 1**

| Material | SG | Young's Modulus |
|---|---|---|
| Amorphous PET (APET) | 1.33 | 2200 |
| Eastar™ | 1.27 | 1360 |
| Tritan™ | 1.18 | 1110 |
| Foamed Eastar™ | 0.9 | 922 |
| Foamed Eastar™ | 0.72 | 765 |
| Foamed Eastar™ | 0.61 | 579 |
| Foamed Tritan™ | 0.54 | 438 |
| Foamed Tritan™ | 0.4 | 341 |
| Foamed Tritan™ | 0.2 | 119 |

### Example 3

In this example, the maximum undercut depth for thermoformed articles produced using various types of polymers was analyzed. Sheets having the A/B/A configuration were produced in accordance with the procedure outlined in Example 1 above. Samples A1-A4 contained a foamed core layer (layer B) and were produced from Tritan™ Copolyester MP100 and Eastar™ Copolyester GN001 (both from Eastman Chemical Company). Samples B1-B8 contained unfoamed core layers (layer B) and were produced from various rigid polymers including PCTG, PETG, rigid PVC, Eastar™ Copolyester GN001, high impact polystyrene, amorphous PET, impact acrylic, polystyrene, and acrylic. The rigid PVD was from Formosa Plastics and the high impact polystyrene was from Americas Styrenics. The rest of the tested polymers were from Eastman Chemical Company. TABLE 2, below, depicts the specific gravity, Young's Modulus measured according to ASTM D882, and elongation at break measured according to ASTM D882 for each of the samples.

In order to determine the maximum depth of the undercuts for each of the sheet samples, thermoformed articles were produced using samples A1-A4 and B1-B8. The thermoforming process was performed using standard conditions known in the art and varied depending on the material being thermoformed. The maximum draw depth for each article was estimated by observing each of the above samples in the thermoforming trials. As shown in TABLE 2, foamed samples A1-A4 were able to produce undercuts having a greater maximum draw depth.

**TABLE 2**

| Sample | Material | Specific Gravity | Modulus, Mpa (stiffness) | Elongation @ Break, % (toughness | Maximum Depth of Undercut | |
|---|---|---|---|---|---|---|
| | | | | | Inches | mm |
| A1 | Foamed Tritan™ | 0.2 | 120 | 10 | 1.06 | 27 |
| A2 | Foamed Tritan™ | 0.55 | 430 | 15 | 1.00 | 25 |
| A3 | Foamed Eastar™ | 0.75 | 765 | 100 | 0.90 | 23 |
| A4 | Foamed Eastar™ | 0.9 | 922 | 115 | 0.72 | 18 |
| B1 | PCTG | 1.18 | 1110 | 120 | 0.58 | 15 |
| B2 | Eastar™ | 1.27 | 1360 | 200 | 0.45 | 11 |
| B3 | Rigid PVC | 1.35 | 1600 | 22 | 0.37 | 9 |
| B4 | High Impact Polystyrene | 1.03 | 1700 | 51 | 0.35 | 9 |
| B5 | Amorphous Polyester | 1.33 | 2200 | 120 | 0.25 | 6 |
| B6 | Impact Acrylic | 1.08 1.17 | 2344 | <22 | 0.24 | 6 |
| B7 | Polystyrene | 1.04 | 2620 | As low as 0.5 | 0.21 | 5 |
| B8 | Acrylic | <1.1 | 2930 | As low as 2.0 | 0.18 | 5 |

### Example 4

In this example, the effect of branching agents on the tear resistance energy of the sheet was observed. Sheets having an A/B/A configuration were produced from Tritan™ Copolyester MP100 (CoPET1) and Eastar™ Copolyester GN001 (CoPET2) using the process described in Example 1. To demonstrate the effects of a branching agent, separate sheets were produced using CoPET1 and CoPET2 which had a branching agent (Joncryl J4368 from BASF) added therewith prior to producing the sheets. More specifically, two separate sheets were created from CoPET1 having 0.3 weight percent of the branching agent and 1.2 weight percent of the branching agent. Likewise, an additional sheet was produced from CoPET2 having 1.2 weight percent of the branching agent. The core layers (layer B) in all these sheets were foamed.

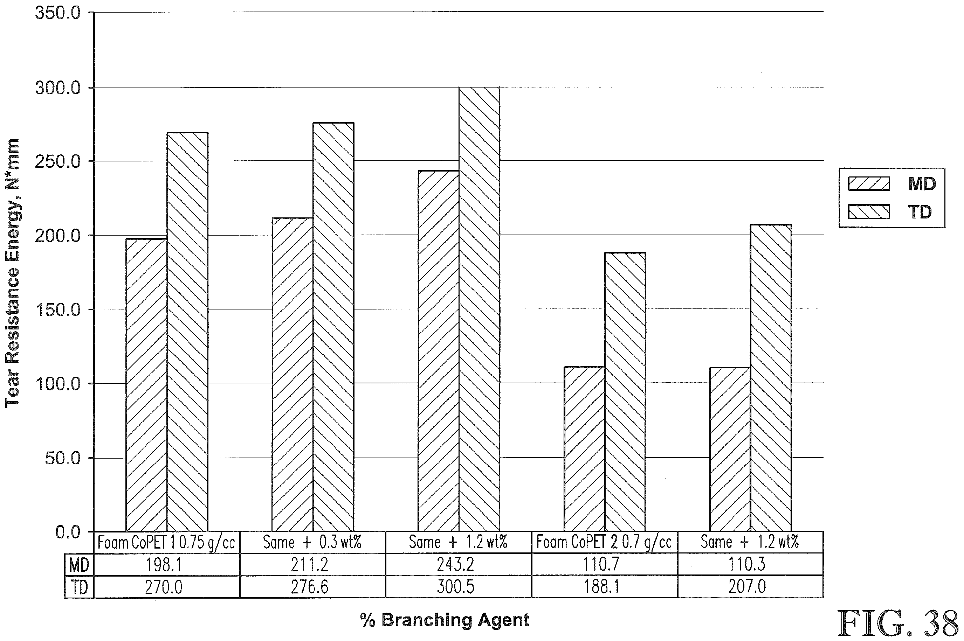

FIG. 38 depicts the effect of the branching agents on the tear resistance energy (N^{∗}mm) of the produced sheets. The tear resistance for each sheet was measured according to ASTM D1004. As shown in FIG. 38, the branching agents had little effect on the foamed sheets. This indicates that branching agents do not necessarily need to be added to the polyesters in order to produce foamed sheets exhibiting desirable tear resistance energy.

### Example 5

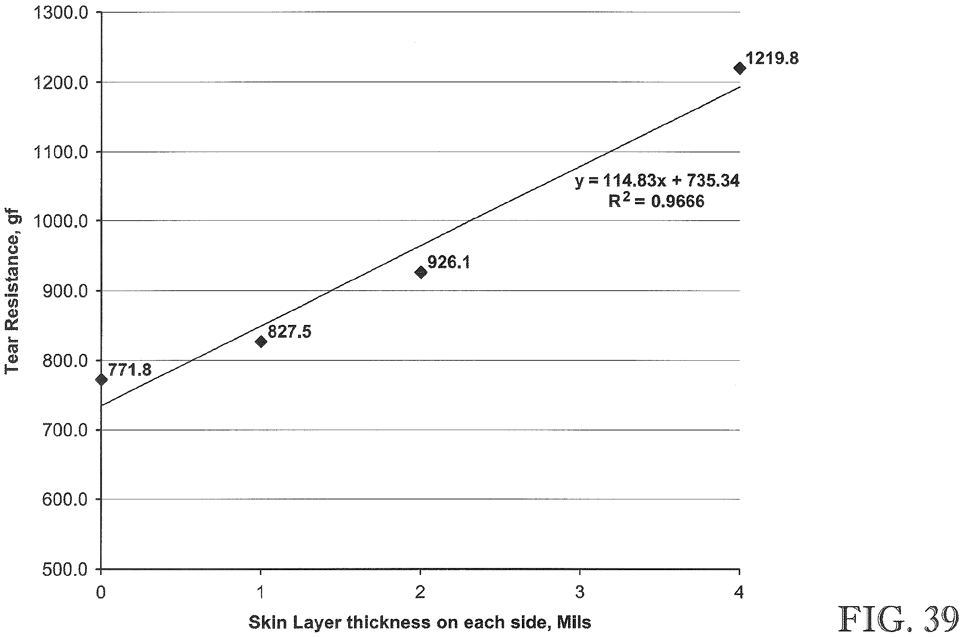

In this example, the effect of skin layer thickness on tear resistance was observed. Sheets were produced from Eastar™ Copolyester GN001 in accordance with the process described in Example 1. In order to determine the effect of skin layer thickness, sheets having the A/B/A configuration, where B was the foamed layer, were compared to a single foamed layer without skin layers (i.e., layer B by itself). The tear resistance of each sheet was measured according to ASTM D1004. As shown in FIG. 39, the tear resistance of the sheets increased as the thickness of the skin layers increased.

### Example 6

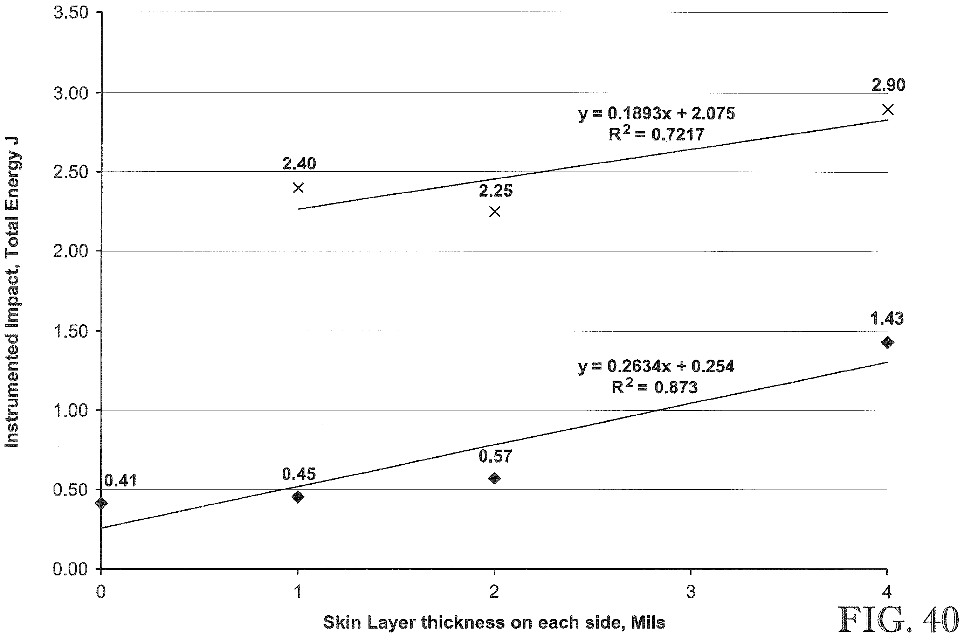

In this example, the effect of skin layer thickness on instrumental impact was observed. Sheets were produced from Tritan™ Copolyester MP100 and Eastar™ Copolyester GN001 in accordance with the process described in Example 1. In order to determine the effect of skin layer thickness, sheets having the A/B/A configuration, where B was the foamed layer, were produced having skin layers (layers A) having varying thickness. In addition, a single foamed layer without skin layers (i.e., layer B by itself) was produced from Eastar™ for comparison purposes. The instrumental impact of each sheet was measured according to ASTM D3763. As shown in FIG. 40, the instrumental impact of the sheets produced from Tritan™ (top line) and Eastar™ (bottom line) increased as the thickness of the skin layers increased.

### Example 7

In this example, thermoformed articles were producing using an array of polymer compositions. The articles were produced using the processes described in Examples 1 and 3. TABLE 3, below, provides the various measurements of these thermoformed articles. These articles included trays which generally contained at least one cavity. A channel refers to a cavity within the tray. Unless otherwise indicated, all samples were unfoamed. The tested polymers included Tritan™ Copolyester MP100 and Eastar™ Copolyester GN001 ("PETG"). The PVC was from Formosa, the HIPS was from Americas Styrenics, and the COC was from TOPAS. The last two foamed samples had an A/B/A configuration, the PETG/COC sample had a 5 layer configuration (PETG/tie/COC/tie/PETG), and the remaining samples had only one layer.

**TABLE 3**

| Undercut Measurements from Various Medical Thermoformed Trays | | | | | | | | |
|---|---|---|---|---|---|---|---|---|
| Thickness (mm) | Material | Tray/ Channel | Length (mm) | Width (mm) | Depth (mm) | Undercut (mm) | Undercut % of Vol^{∗}Thick | Undercut % of Width^{∗}Depth^{∗} Thick |
| 1.016 | PETG/ COC | Channel | NA | 8 | 16 | 3 | NA | 2.31% |
| 0.635 | PVC | Tray | 381 | 115 | 69.85 | 2 | 0.0001% | 0.04% |
| 0.584 | PETG | Channel | NA | 10 | 12 | 2.5 | NA | 3.57% |
| 1.016 | Tritan™ | Tray | 387.35 | 311.15 | 76.2 | 6 | 0.0001% | 0.02% |
| 1.219 | PVC | Tray | 381 | 165.1 | 114.3 | 3 | 0.0000% | 0.01% |
| 0.559 | PETG | Tray | 60 | 60 | 11 | 3 | 0.0136% | 0.81% |
| 0.381 | PETG | Channel | NA | 16 | 10 | 2 | NA | 3.28% |
| 0.508 | PETG | Tray | 72 | 72 | 21 | 2 | 0.0036% | 0.26% |
| 0.559 | HIPS | Tray | 120 | 78 | 31 | 1 | 0.0006% | 0.07% |
| 0.762 | HIPS | Tray | 158 | 106 | 13 | 2 | 0.0012% | 0.19% |
| 1.321 | Foamed Tritan™ | Channel | 60 | 9 | 8 | 2 | 0.0351% | 2.10% |
| 1.321 | Foamed Tritan™ | Channel | 27 | 16 | 8 | 3 | 0.0657% | 1.77% |

## Claims

1. A thermoformed article comprising:
a pair of spaced-apart walls defining a cavity there between; and
an undercut projecting from one of said walls,
wherein said undercut presents an apex, wherein said undercut has a maximum undercut draw depth measured at said apex and a cross-sectional undercut area measured at said apex, wherein said cavity has a cross-sectional cavity area,
wherein the ratio of said cross-sectional cavity area to said cross-sectional undercut area is at least 1:1 and not more than 100:1,
wherein at least a portion of said undercut and at least a portion of said wall from which said undercut projects are formed of a common layer of a polyester-containing material having a void volume; wherein the polyester-containing material comprises an acid component and a glycol component;
**characterized in that**
said maximum undercut draw depth is at least 15 millimeters,
said void volume is at least 5 percent, and
the acid component comprises terephthalic acid, isophthalic acid, or a combination thereof; and the glycol component comprises cyclohexanedimethanol, or 2,2,4,4-tetramethyl-1,3-cyclobutanediol, or a combination thereof.

2. The thermoformed article of claims 1 wherein said polyester-containing material comprises a specific gravity of not more than 0.9.

3. The thermoformed article of claims 1 to 2 wherein said polyester-containing material has a Young's Modulus of at least 50 Mpa to not more than 1000 Mpa as measured according to ASTM D882 and an elongation at break percentage of at least 10 percent to 125 percent as measured according to ASTM D882.

## Patentansprüche

1. Thermogeformter Gegenstand, aufweisend:
ein Paar von voneinander beabstandeten Wänden, die einen Hohlraum dazwischen definieren; und
eine Hinterschneidung, die von einer der Wände vorsteht,
wobei die Hinterschneidung einen Scheitelpunkt aufweist, wobei die Hinterschneidung eine an dem Scheitelpunkt gemessene maximale Hinterschneidungsziehtiefe aufweist, und eine Hinterschneidungsquerschnittsfläche gemessen am Scheitelpunkt, wobei der Hohlraum einen Querschnittshohlraumbereich aufweist,
wobei das Verhältnis der Querschnittshohlraumfläche zu der Hinterschneidungsquerschnittsfläche mindestens 1:1 und nicht mehr als 100:1 beträgt,
wobei mindestens ein Abschnitt der Hinterschneidung und mindestens ein Abschnitt der Wand, von dem die Hinterschneidung vorsteht, aus einer gemeinsamen Schicht eines Polyester-enthaltenden Materials mit einem Hohlraumvolumen gebildet werden; wobei das Polyester-enthaltende Material eine Säurekomponente und eine Glykolkomponente enthält;
**dadurch gekennzeichnet, dass**
die maximale Hinterschneidungsziehtiefe mindestens 5 mm beträgt;
das Hohlraumvolumen mindestens 5 % beträgt, und
die Säurekomponente Terephthalsäure, Isophthalsäure oder eine Kombination davon umfasst; und die Glykolkomponente Cyclohexandimethanol oder 2,2,4,4-Tetramethyl-1,3-cyclobutandiol oder eine Kombination davon umfasst.

2. Thermogeformter Gegenstand nach Anspruch 1, wobei das Polyester-enthaltende Material ein spezifisches Gewicht von nicht mehr als 0,9 aufweist.

3. Thermogeformter Gegenstand nach einem der Ansprüche 1 bis 2, wobei das Polyester-enthaltende Material einen Young Modul von mindestens 50 MPa bis nicht mehr als 1.000 MPa aufweist, gemessen gemäß ASTM D882, und einen Bruchdehnungsprozentsatz von mindestens 10 Prozent bis 125 Prozent aufweist, gemessen nach ASTM D882.

## Revendications

1. Article thermoformé comprenant :
une paire de parois espacées définissant une cavité entre elles ; et
une contre-dépouille faisant saillie de l'une desdites parois,
dans lequel ladite contre-dépouille présente un sommet, dans lequel ladite contre-dépouille a une profondeur d'emboutissage en contre-dépouille maximale mesurée audit sommet et une surface de contre-dépouille en section transversale mesurée audit sommet, dans lequel ladite cavité a une surface de cavité en section transversale,
dans lequel le rapport de ladite surface de cavité en section transversale à ladite surface de contre-dépouille en section transversale est d'au moins 1:1 et inférieure ou égale à 100:1,
dans lequel au moins une partie de ladite contre-dépouille et au moins une partie de ladite paroi à partir de laquelle ladite contre-dépouille fait saillie sont formées d'une couche commune de matériau contenant du polyester ayant un volume de vide ; dans lequel le matériau contenant du polyester comprend un composant acide et un composant glycol ;
**caractérisé en ce que**
ladite profondeur d'emboutissage en contre-dépouille maximale est d'au moins 15 millimètres,
ledit volume de vide est d'au moins 5 pourcents, et
le composant acide comprend l'acide téréphtalique, l'acide isophtalique, ou un mélange de ceux-ci ; et le composant glycol comprend le cyclohexanediméthanol, ou le 2,2,4,4-tetraméthyl-1,3-cyclobutanediol, ou une combinaison de ceux-ci.

2. Article thermoformé selon la revendication 1 dans lequel ledit matériau contenant du polyester comprend une gravité spécifique inférieure ou égale à 0.9.

3. Article thermoformé selon les revendications 1 à 2 dans lequel ledit matériau contenant du polyester a un module de Young d'au moins 50 Mpa à au plus 1000 Mpa tel que mesuré selon la norme ASTM D882 et un pourcentage d'allongement à la rupture d'au moins 10 pourcents à 125 pourcents tel que mesuré selon la norme ASTM D882.
